# EUROPÄISCHE PATENTSCHRIFT

(11) **EP 1 084 603 B1**
(45) Veröffentlichungstag und Bekanntmachung des Hinweises auf die Patenterteilung: **24.11.2004**
(21) Anmeldenummer: 00118456.3
(22) Anmeldetag: 25.08.2000
(51) Int. Cl.: A01C 7/10

(54) **Sämaschine mit einstellbarer Särate**
Sowing machine with adjustable seed rate
Sémoir à débit de semence réglable

(30) Priorität: 20.09.1999 US 399568
(43) Veröffentlichungstag der Anmeldung: 21.03.2001
(73) Patentinhaber: DEERE & COMPANY, Moline, Illinois 61265-8098 (US)
(72) Erfinder: Foley, Daniel Michael, Geneseo, IL 61254 (US); Stanfill, Ralph Everette, Geneseo, IL 61254 (US)
(74) Vertreter: Holst, Sönke, Dr.

(56) Entgegenhaltungen:
- EP-A- 0 318 412
- CA-A- 1 126 587
- DE-A- 4 413 474
- DE-A- 19 544 237
- DE-C- 74 021

## Beschreibung

Die Erfindung betrifft eine Sämaschine mit einstellbarer Särate, mit einem Messsystem, das ein in einer Messkammer drehbar angeordnetes Messelement aufweist, und mit einer axial bewegbaren, mit dem Messelement antriebsmäßig verbundenen Antriebswelle, wobei das Messelement gemeinsam mit der Antriebswelle durch einen Motor axial bewegbar ist, um die Särate des Messsystems zu verändern.

Sä- oder Drillmaschinen weisen in der Regel eine Vielzahl in seitlicher Richtung beabstandeter Messsysteme mit ausgekehlten Messwalzen auf, die durch ein Bodenrad angetrieben werden, um Saat mit einer- zur Vorwärtsgeschwindigkeit der Maschine proportionalen Rate abzumessen. Eine Änderung der Rate, mit der gesät wird, ist entweder mit einer Verstellung des Übersetzungsverhältnisses eines Getriebes, das zwischen dem Bodenrad und einer mit den ausgekehlten Messwalzen verbundenen Antriebswelle angeordnet ist, oder mit einer Bewegung der ausgekehlten Messwalzen innerhalb der Messkammer, indem die Antriebswelle seitlich verschoben wird, um die effektive Messfläche der Messwalzen zu verändern, verbunden. Die letztgenannte Variante der Einstellung wird durch manuelles Verschwenken eines Verstellhebels durchgeführt, der am Gerät befestigt und mit der Antriebswelle gekoppelt ist, um sie seitlich zu verschieben. Bei einem typischen Einstellmechanismus greift der Verstellhebel in ein verzahntes Schaltsegment ein, um den Verstellhebel in einer von mehreren unterschiedlichen Verstellpositionen zu verriegeln. Auf diese Weise wird der Verstellhebel und damit die Antriebswelle während des Betriebes an Ort und Stelle gehalten. Markierungen auf dem Schaltsegment zeigen einem Bediener die Stellung des Verstellhebels an, um ihm das Erreichen einer gewünschten Särate zu erleichtern. Eine Verschiebung der Antriebswelle mittels eines Linearmotors ist in der US 5 025 951 A beschrieben.

Es ist nicht ungewöhnlich, eine Drillmaschine mit Sensoren für eine oder mehrere der Saatreihen auszustatten, um die Särate zu überwachen und einem Bediener in einem die Drillmaschine ziehenden Traktor eine entsprechende Anzeige bereitzustellen. Wenn ein Bediener beabsichtigt, die Särate zu ändern, ist es notwendig, den Traktor anzuhalten, abzusteigen und manuell die Position des Verstellhebels an der Sämaschine einzustellen. Nur wenn der Bediener zum Traktor zurückkehrt und wieder anfängt zu säen, wird der Bediener in der Lage sein, die Überwachungsanzeige zu sehen, und festzustellen, ob die gewünschte Särate erreicht wurde. Es handelt sich hier um eine zeitaufwändige Aufgabe, die die Produktivität vermindert.

Das der Erfindung zugrunde liegende Problem wird darin gesehen, einen Einstellmechanismus für eine Drillmaschine bereitzu stellen, die einem Bediener eine Einstellung der Särate ermöglicht, ohne anzuhalten oder den Traktor zu verlassen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Antriebswelle mittels eines schwenkbaren Verstellhebels in die der jeweils gewünschten Särate entsprechende Position zu verschieben. Der Verstellhebel wird durch einen steuer- und drehbaren Motor in die gewünschte Position verbracht. Die Drehung des Motors wird durch eine Antriebseinrichtung, die eine mit Gewinde versehene Verstellschraube und eine mit dem Gewinde der Verstellschraube zusammenwirkende Mutter umfasst, in eine Linear- bzw. Schwenkbewegung umgewandelt. Bei einer Drehung des Motors wird die Mutter über die Länge der Verstellschraube verschoben. Anzumerken ist, dass unter der Särate die Menge des Saatguts verstanden wird, die von der Sämaschine beim Zurücklegen einer bestimmten Strecke abgegeben wird. Die beschriebenen Elemente der Vorrichtung zur Einstellung der Särate, insbesondere der Verstellhebel, die Antriebseinrichtung und der Motor, sind an der Sämaschine gelagert.

Auf diese Weise erhält man eine Vorrichtung zur Einstellung der Särate einer Sä- oder einer Drillmaschine, bei der ein relativ preiswerter, eine Rotationsbewegung bereitstellender Motor Verwendung findet, eine Schwenkbewegung eines Verstellhebels zu erzeugen. Der Verstellhebel steuert seinerseits die axiale Position der Antriebswelle, auf der ein Messelement sitzt. Ein Vorteil der erfindungsgemäßen Vorrichtung zur Einstellung der Särate liegt darin, dass Einstellungen während der Fahrt gemacht werden können, ohne das Gerät anzuhalten, so dass die Produktivität gesteigert wird. Ein weiterer Vorteil liegt darin, dass die Särate beliebig (unendlich) fein einstellbar ist. Auch kann die erfindungsgemäße Vorrichtung zur Einstellung der Särate mit nur wenigen Änderungen nachträglich an bereits vorhandenen Sämaschinen angebracht werden.

Vorzugsweise ist die Verstellschraube antriebsmäßig mit dem Motor gekoppelt, also durch ihn in Rotation versetzbar. Die auf das-Gewinde der Verstellschraube gedrehte Mutter ist in dieser Ausführungsform am Verstellhebel befestigt und gegen Drehung gesichert. Dreht sich der Motor, wird die Schraube um ihre Längsachse gedreht, aber nicht axial verschoben. Die Mutter, deren Gewinde mit dem der Verstellschraube zusammenwirkt, bewegt sich entlang der Länge der Verstellschraube, um den Verstellhebel zu verschwenken. Denkbar wäre aber auch, die Mutter mit dem Motor in Drehung zu versetzen und die Schraube drehfest am Verstellhebel zu lagern.

Als Motor kommt insbesondere ein Elektromotor infrage. Er kann mittels eines im Abstand vom Motor angeordneten Schalters gesteuert werden, der sich beispielsweise in der Kabine des die Sämaschine ziehenden Traktors befindet.

Weiterhin ist vorgeschlagen, den Verstellhebel mittels einer manuell drehbaren Handkurbel zu verstellen, um im Falle eines Versagens des Motors, seiner Ansteuerung oder der Stromversorgung die Särate wenigstens noch manuell variieren zu können. Der Bediener ist in der Lage, den Sävorgang fortzusetzen und die gewünschten Einstellungen der Säraten vorzunehmen. Auch bleibt einem Bediener, der schon angehalten hat und an der Sämaschine arbeitet und eine Einstellung durchzuführen wünscht, eine manuelle Einstellung weiterhin möglich. Die Handkurbel kann zur Drehung der Verstellschraube eingerichtet sein.

Im Falle eines derartigen Fehlers erweist es sich als zweckmäßig, den Motor von der Verstellschraube abzukoppeln, um sie mit der Handkurbel manuell in Drehung versetzen zu können.

Dazu ist insbesondere vorgeschlagen, den Motor bewegbar anzubringen, so dass er in eine erste Position verbringbar ist, in der ein mit dem Motor in Antriebsverbindung stehendes Antriebszahnrad mit einem angetriebenen Zahnrad kämmt, welches antriebsmäßig mit der Verstellschraube verbünden ist. Wird der Motor in seine zweite Position verbracht, z. B. verschwenkt, in der das Antriebszahnrad mit dem angetriebenen Zahnrad außer Eingriff ist, kann die Verstellschraube unproblematisch mit der Handkurbel zur Einstellung der Särate gedreht werden.

Vorzugsweise ist der Motor an einer schwenkbar an der Sämaschine gelagerten Halterungsklammer gelagert, an der auch ein Ende der Verstellschraube drehbar gelagert sein kann. Die Motorbefestigung kann an der Halterungsklammer schwenkbar gelagert und durch eine Feder in die erste Position, in der das mit dem Motor in Antriebsverbindung stehende Antriebszahnrad mit dem angetriebenen, mit der Verstellschraube verbundenen Zahnrad kämmt, vorgespannt sein.

In den Zeichnungen ist ein nachfolgend näher beschriebenes Ausführungsbeispiel der Erfindung dargestellt. Es zeigt:
- Fig. 1: eine perspektivische rückseitige Ansicht einer Drillmaschine mit einer erfindungsgemäßen Vorrichtung zur Einstellung der Särate,
- Fig. 2: eine unterseitige Ansicht einer erfindungsgemäßen Vorrichtung zur Einstellung der Särate,
- Fig. 3: einen Schnitt durch die Vorrichtung zur Einstellung der Särate entlang der Linie 3-3 in Figur 2, und
- Fig. 4: eine Explosionszeichnung der erfindungsgemäßen Vorrichtung zur Einstellung der Särate.

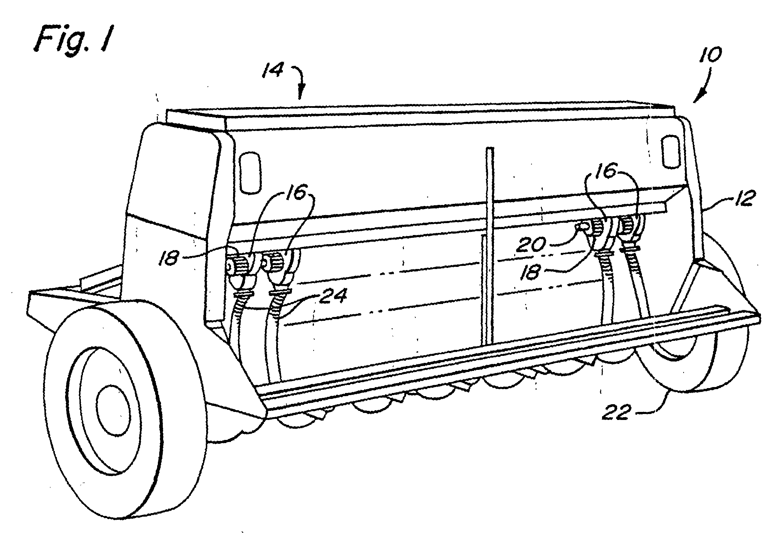

In Figur 1 ist eine Sä- oder Drillmaschine 10 gezeigt, die einen Rahmen 12 aufweist, der einen Saatkasten 14 für kornförmiges Saatgut trägt. Der Saatkasten 14 öffnet sich nach unten zu Saatmesssystemen oder ausgekehlten Saatmesskammern, die insgesamt mit 16 gekennzeichnet sind. Als Messelemente dienende, auskehlte Messwalzen 18 werden durch eine quadratische Antriebswelle 20 angetrieben, die ihrerseits antriebsmäßig mit Rädern 22 verbunden ist, die im Eingriff mit dem Boden stehen, um den richtigen Betrag an Saat in Saatgutrohre 24 abzumessen, wenn die Maschine vorwärts über ein Feld gezogen wird. Die Welle 20 ist in (seitlicher) Querrichtung bewegbar, um die Messwalzen 18 in die ihnen zugeordnete Messkammer 16 oder aus ihnen hinaus zu bewegen, um je nach Wunsch mehr oder weniger Saat abzumessen.

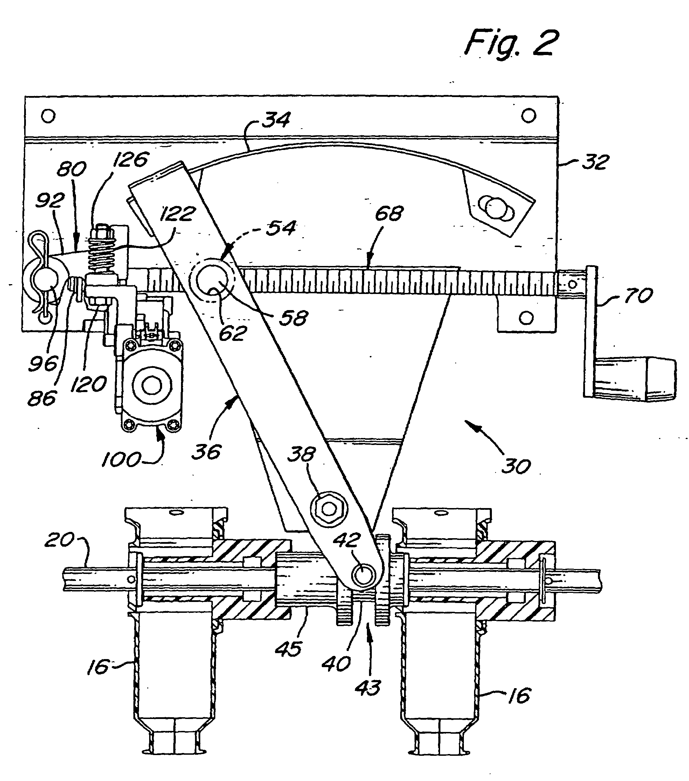

In den Figuren 2 bis 4 ist eine erfindungsgemäße Vorrichtung zur Einstellung der Antriebsrate detaillierter wiedergegeben und insgesamt mit 30 gekennzeichnet. Die Einstellvorrichtung 30 ist durch eine Platte 32 am Saatkasten 14 befestigt. Ein Markierungen oder Schriftzeichen tragendes Schaltsegment 34 ist ebenfalls an der Platte 32 angeschraubt. Ein Verstellhebel 36 ist an der Platte 32 um die Achse eines Schwenkbolzens 38 schwenkbar befestigt. Das Ende 40 des Verstellhebels 36 weist einen Stift 42 auf, der in einer Nut 43 eines Kragens 45 auf der Antriebswelle 20 sitzt, um die Antriebswelle 20 quer zu verschieben, wenn der Verstellhebel 36 um die Achse des Schwenkbolzens 38 verschwenkt, siehe Figur 2.

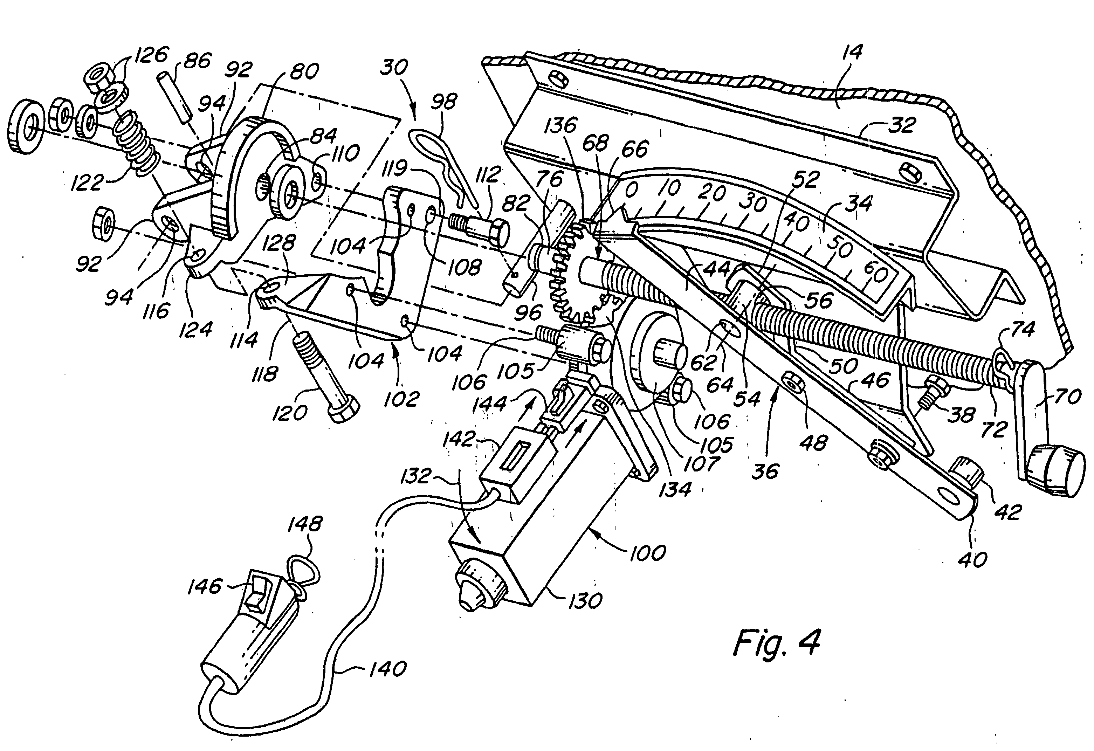

Der Verstellhebel 36 ist aus zwei flachen Leisten aufgebaut, einer Hauptleiste 44 und einer sekundären Leiste 46. Die zwei Leisten sind aneinander durch den Schwenkbolzen 38 und einen Zusammenbau 48 mit Schraube und Mutter befestigt, siehe Figur 4. Die sekundäre Leiste 46 hat einen abgeknickten Übergangsbereich 50, der zu einem Endbereich 52 führt, der parallel zur Hauptleiste 44 und von ihr beabstandet ist. Eine mit Gewinde versehene Mutter 54 ist zwischen den zwei Leisten 44, 46 des Verstellhebels 36 abgestützt und hat eine mit Gewinde versehene Bohrung 56. Die Mutter 54 hat sich gegenüberliegend erstreckende zylindrische Befestigungsbolzen 58. Die Befestigungsbolzen 58 sind in Öffnungen 62 in der Hauptleiste 44 und der sekundären Leiste 46 aufgenommen. Der Mutter 54 ist somit ermöglicht, sich um die von den Befestigungsbolzen 58 definierte Achse 64 zu drehen. Die Achse 64 ist senkrecht zur Achse der mit Gewinde versehenen Bohrung 56. Die Hauptleiste 44 weist weiterhin an ihrem äußeren Ende einen Zeiger 66 auf, der in der Nähe der Schriftzeichen auf dem Schaltsegment 34 angeordnet ist, um die Position des Verstellhebels 36 anzuzeigen.

Eine längliche Verstellschraube 68 ist in die Bohrung 56 der Mutter 54 geschraubt. Eine Drehung der Verstellschraube 68, wie sie weiter unten diskutiert wird, bedingt, dass sich die Mutter 54 entlang der Länge der Verstellschraube 68 bewegt. Dadurch dreht sich der Schalthebel 36 um den Schwenkbolzen 38, wobei die Antriebswelle 20 bewegt wird, um die Särate einzustellen. Eine Handkurbel 70 ist am Ende 72 der Verstellschraube 68 durch einen Halterungsstift 74 befestigt. Das gegenüberliegende Ende 76 der Verstellschraube 68 ist in einer Halterungsklammer 80 abgestützt. Das Ende 76 der Verstellschraube 68 weist eine ringförmige Nut 82 auf. Das Ende 76 der Verstellschraube 68 ist in einer Bohrung 84 in der Halterungsklammer 80 aufgenommen und ist darin durch einen Rollenbolzen 86 gehaltert, der in eine Bohrung (nicht gezeigt) in der Halterungsklammer 80 und in die Nut 82 in der Verstellschraube 68 eingesetzt ist. Diese Befestigung der Verstellschraube 68 sichert die Verstellschraube 68 in der Bohrung 84 der Halterungsklammer 80 und ermöglicht gleichzeitig eine Drehung der Verstellschraube 68 um ihre Achse.

Die Halterungsklammer 80 hat ein Paar Ansätze 92 mit ausgerichteten Öffnungen 94. Die Halterungsklammer 80 wird an der Platte 32 in der Weise angebracht, dass die Ansätze 92 über einem an der Platte 32 befestigten Bolzen 96 platziert werden. Ein Halterungsclip 98 haltert die Halterungsklammer 80 am Bolzen 96. Die Halterungsklammer 80 und die Verstellschraube 68 sind frei um die Achse des Bolzens 96 verschwenkbar. Das ist zweckmäßig, weil die Mutter 54 sich entlang eines Bogens um die Achse des Schwenkbolzens 38 des Verstellhebels 36 bewegt, wenn die Mutter 54 sich über die Länge der Verstellschraube 68 bewegt.

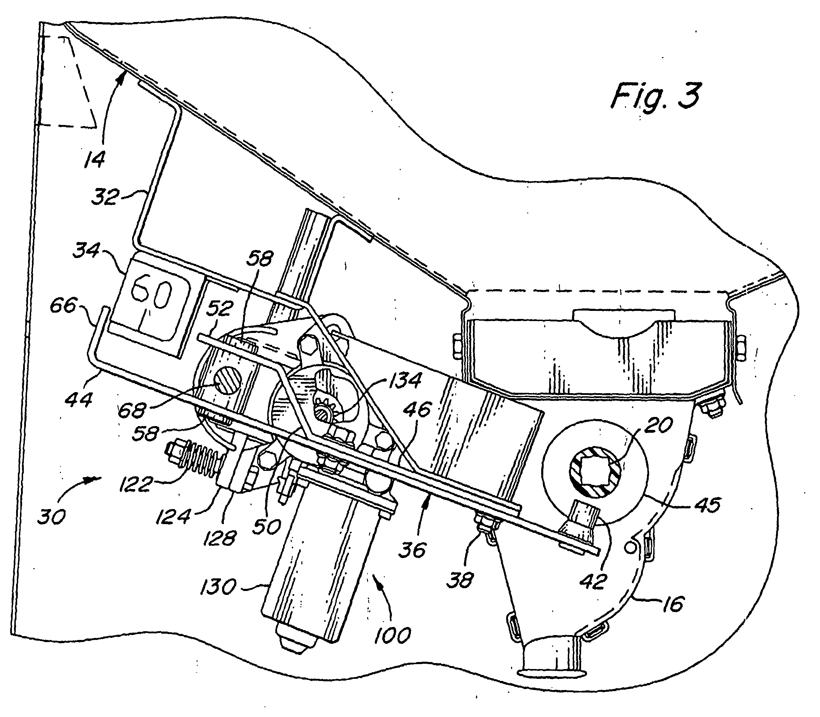

Ein Zusammenbau 100 mit Motor und Getriebe ist durch eine Motorbefestigung 102 mit der Halterungsklammer 80 gekoppelt. Die Motorbefestigung 102 hat drei Öffnungen 104, die mit Bohrungen in Ansätzen 105 im Getriebegehäuse 107 fluchten und Bolzen 106 aufnehmen, um den Zusammenbau 100 mit Motor und Getriebe an die Motorbefestigung 102 zu koppeln. Die Motorbefestigung 102 hat eine weitere Öffnung 108, die mit einer Öffnung 110 in der Halterungsklammer 80 ausgerichtet ist. Ein sich durch die Öffnungen 108 und 110 erstreckender Schwenkbolzen 112 koppelt die Motorbefestigung 102 schwenkbar an der Halterungsklammer 80. Eine zusätzliche fluchtende Öffnung 114 in der Motorbefestigung 102 und eine Öffnung 116 in der Halterungsklammer 80 sind auf einer Achse 118 angeordnet, die tangential zu einem Kreis um die Achse 119 des Schwenkbolzens 112 orientiert ist. Ein Bolzen 120 erstreckt sich durch die Öffnungen 114, 116 und ist von einer Feder 122 umschlossen. Die Feder 122 ist zwischen einem Ansatz 124 der Halterungsklammer 80 und dem Zusammenbau 126 mit Mutter und Unterlegescheibe angeordnet. In dieser Position drückt die Feder 122 den Ansatz 128 der Motorbefestigung 102 gegen den Ansatz 124 der Halterungsklammer 80. Wenn man den Motor 130 anfasst und ihn in Richtung des Pfeils 132 drückt, führt das dazu, dass die Motorbefestigung 102, betrachtet man Figur 3 und 4, im Gegenuhrzeigersinn um den Schwenkbolzen 112 dreht.

Die Motorausgangswelle trägt ein Antriebszahnrad. 134, siehe Figur 3, das mit einem angetriebenen Zahnrad 136 im Eingriff steht, das an der Verstellschraube 68 befestigt ist. Im Betrieb des Motors 130 dreht sich das Antriebszahnrad 134, was bedingt, dass sich das angetriebene Zahnrad 136 und die Verstellschraube 68 drehen. Die Drehung der Verstellschraube 68 bedingt, dass sich die Mutter 54 entlang der Verstellschraube 68 verschiebt und den Verstellhebel 36 verschwenkt. Die Feder 122 hält die Motorbefestigung 102 und den Zusammenbau 100 mit Motor und Getriebe in einer Betriebsposition, in der das Antriebszahnrad 134 sich im Eingriff mit dem angetriebenen Zahnrad 136 befindet, was den Motor in die Lage versetzt, die Verstellschraube 68 zu drehen. Im Fall eines Versagens des den Motor 130 steuernden elektrischen Systems kann der Bediener die zwei Zahnräder 134, 136 von Hand außer Eingriff bringen, indem er von Hand den Motor 130, wie oben beschrieben, schiebt, um den Zusammenbau 100 mit Motor und Getriebe im Gegenuhrzeigersinn um den Schwenkbolzen 112 zu drehen. Dadurch gelangen Antriebszahnrad 134 und das angetriebene Zahnrad 136 außer Eingriff. Wenn die zwei Zahnräder 134, 136 außer Eingriff sind, kann der Bediener die Handkurbel 70 drehen, um die Verstellschraube 68 zu drehen, um den Verstellhebel 36 zu bewegen und die Särate einzustellen.

Ein elektrisches Kabel 140 ist durch Verbinder 142 und 144 mit dem Motor 130 gekoppelt. Das Kabel 140 verbindet den Motor 130 mit einer Stromquelle, wie der nicht gezeigten Batterie des Traktors, und einem Schalter 146 mit drei Stellungen. Der Schalter 146 wird von einem Bediener benutzt, um den Motor 130 zu betätigen, so dass er sich in jede gewünschte Richtung drehen kann. Das Gehäuse des Schalters 146 umfasst einen Ring 148, um den Schalter 146 an einem Knopf des Traktors aufzuhängen. Da der Schalter 146 nicht an den Traktor angebracht ist, kann jeder Traktor die Maschine 10 ziehen, wobei das Kabel 140 und der Schalter 146 einfach in die Kabine des ziehenden Traktors verbracht werden.

Während ein Elektromotor zur Betätigung des Verstellmechanismus gezeigt wird, ist offensichtlich, dass andere Typen von Motoren, einschließlich eines hydraulischen oder pneumatischen Motors verwendet werden können, um die Verstellschraube 68 zu drehen.

Die erfindungsgemäße Vorrichtung 30 zur Einstellung der Särate erlaubt dem Bediener, die Särate während der Fahrt von der Kabine des Traktors aus zu ändern. Die Vorrichtung 30 zur Einstellung der Särate kann in Verbindung mit einem Säratenmonitor verwendet werden, der dem Bediener eine Information über die aktuelle Särate bereitstellt. Die Information des Monitors wird dann benutzt, um die notwendigen oder beabsichtigten Einstellungen durchzuführen.

Die Vorrichtung 30 zur Einstellung der Särate kann auch beim automatisierten Säen mit variabler Rate benutzt werden. In diesem Falle würde der Schalter 146 in eine Systemsteuerung integriert, die die Särate auf verschiedenen Eingabeinformationen basierend einstellt, einschließlich der Position auf dem Feld.

Die Vorrichtung 30 zur Einstellung der Särate kann nachträglich an bereits existierenden Sä- oder Drillmaschinen angebracht werden, indem die vorhandene Platte und der Verstellhebel durch die Platte 32 und den Verstellhebel 36 ersetzt und die anderen Komponenten der Vorrichtung 10 zur Einstellung der Särate hinzugefügt werden, wie oben beschrieben.

## Patentansprüche

1. Sämaschine (10) mit einstellbarer Särate, mit einem Messsystem, das ein in einer Messkammer (16) drehbar angeordnetes Messelement aufweist, und mit einer axial bewegbaren, mit dem Messelement antriebsmäßig verbundenen Antriebswelle (20), wobei das Messelement gemeinsam mit der Antriebswelle (20) durch einen Motor (130) axial bewegbar ist, um die Särate des Messsystems zu verändern, **gekennzeichnet durch** einen schwenkbaren Verstellhebel (36), der zur axialen Verschiebung der Antriebswelle (20) eingerichtet und mittels einer Antriebseinrichtung **durch** den in Drehung versetzbaren Motor (130) verschwenkbar ist, wobei die Antriebseinrichtung mit einer Verstellschraube (68) und einer mit dem Gewinde der Schraube (68) zusammenwirkenden Mutter (54) versehen ist.

2. Sämaschine (10) nach Anspruch 1, **dadurch gekennzeichnet, dass** der Motor (130) eingerichtet ist, die Verstellschraube (68) um ihre Längsachse zu drehen, und dass die Mutter (54) am Verstellhebel (36) befestigt und gegen Drehung gesichert ist und über die Länge der Verstellschraube (68) verschoben wird, wenn sich die Verstellschraube (68) dreht.

3. Sämaschine (10) nach Anspruch 1 oder 2, **gekennzeichnet durch** einen elektrisch mit dem Motor (130) verbundenen, im Abstand vom Motor (130) angeordneten Schalter (146) zur Betätigung des Motors (130).

4. Sämaschine (10) nach einem der vorhergehenden Ansprüche, **gekennzeichnet durch** eine Handkurbel (70), die an der Verstellschraube (68) angebracht ist, um sie manuell zum Verschwenken des Verstellhebels (36) drehen zu können.

5. Sämaschine (10) nach einem der vorhergehenden Ansprüche, **dadurch gekennzeichnet, dass** der Motor (130) manuell von der Verstellschraube (68) abkoppelbar ist, um insbesondere eine manuelle Drehung der Verstellschraube (68) durch die Handkurbel (70) zu erleichtern.

6. Sämaschine (10) nach einem der Ansprüche 2 bis 5, **dadurch gekennzeichnet, dass** der Motor (130) mit der Verstellschraube (68) durch ein vom Motor (130) getriebenes Antriebszahnrad (134), das sich mit einem mit der Verstellschraube (68) verbundenen, angetriebenen Zahnrad (136) im Eingriff befindet, in Antriebsverbindung steht, und dass der Motor (130) bewegbar, insbesondere schwenkbar, angebracht und in eine Position vorgespannt ist, in der sich das Antriebszahnrad (134) und das angetriebene Zahnrad (136) im Eingriff befinden.

7. Sämaschine (10) nach einem der vorhergehenden Ansprüche, **dadurch gekennzeichnet, dass** eine schwenkbar gelagerte Halterungsklammer (80) den Motor (130) und/oder ein Ende (76) der Verstellschraube (68) drehbar lagert.

8. Sämaschine (10) nach Anspruch 7, **dadurch gekennzeichnet, dass** eine den Motor (130) halternde Motorbefestigung (102) schwenkbar an der Halterungsklammer (80) angebracht ist, wobei eine Feder (122) die Motorbefestigung (102) in eine Position vorspannt, in der sich das Antriebszahnrad (134) und das angetriebene Zahnrad (136) im Eingriff befinden.

9. Sämaschine (10) nach einem der vorhergehenden Ansprüche, **dadurch gekennzeichnet, dass** mehrere Messsysteme nebeneinander angeordnet sind, die jeweils eine Messkammer (16) und ein darin angeordnetes, mit der Antriebswelle (20) verbundenes Messelement aufweisen.

10. Vorrichtung (30) zur Einstellung der Särate einer Sämaschine (10) , insbesondere nach einem der vorhergehenden Ansprüche, mit einem Motor (130) zur axialen Verschiebung einer mit einem Messelement verbundenen Antriebswelle (20), **gekennzeichnet durch** einen schwenkbaren Verstellhebel (36), der zur axialen Verschiebung der Antriebswelle (20) eingerichtet ist, und der **durch** einen in Drehung versetzbaren Motor (130) verschwenkbar ist, wobei sich eine Antriebseinrichtung mit einer Verstellschraube (68) und einer mit dem Gewinde der Schraube (68) zusammenwirkenden Mutter (54) zwischen Motor (130) und Verstellschraube (68) befindet.

## Claims

1. A seed drill (10) with an adjustable seeding rate, with a metering system which comprises a metering element rotatably arranged in a metering chamber (16) and with an axially movable drive shaft (20) drivably connected to the metering element, wherein the metering element is axial movable together with the drive shaft (20) by a motor (130), in order to vary the seeding rate of the metering system, **characterized by** a pivotable adjusting lever (36) which is arranged to shift the drive shaft (20) axially and can be pivoted by means of a drive device through the motor (130) which can be set in rotation, wherein the drive device is provided with an adjusting screw (68) and a nut (54) cooperating with the thread of the screw (68).

2. A seed drill (10) according to claim 1, **characterized in that** the motor (130) is arranged to turn the adjusting screw (68) about its longitudinal axis and **in that** the nut (54) is fixed on the adjusting lever (36) and secured against rotation and is displaced along the length of the adjusting screw (68) when the adjusting screw (68) turns.

3. A seed drill (10) according to claim 1 or 2, **characterized by** a switch (146) connected electrically to the motor (130) and disposed at a distance from the motor (130).

4. A seed drill (10) according to any of the preceding claims, **characterized by** a hand crank (70) which is fitted on the adjusting screw (68), in order to be able to turn it manually to pivot the adjusting lever (36).

5. A seed drill (10) according to any of the preceding claims, **characterized in that** the motor (130) can be uncoupled manually from the adjusting screw (68), in order in particular to facilitate manual rotation of the adjusting screw (68) by the hand crank (70).

6. A seed drill (10) according to any of claims 2 to 5, **characterized in that** the motor (130) is coupled to drive the adjusting screw (68) through a drive gearwheel (134) which is driven by the motor (130) and is in engagement with a driven gearwheel (136) connected to the adjusting screw (68), and **in that** the motor (130) is fitted movably, especially pivotally, and is biased into a position in which the drive gearwheel (134) and the driven gearwheel (136) are in engagement.

7. A seed drill (10) according to any of the preceding claims **characterized in that** a pivotally mounted retaining bracket (80) supports rotatably the motor (130) and/or one end (76) of the adjusting screw (68).

8. A seed drill (10) according to claim 7, **characterized in that** a motor mount (102) holding the motor (130) is fitted pivotally on the retaining bracket (80), while a spring (122) biases the motor mount (102) into a position in which the drive gearwheel (134) and the driven gearwheel (136) are in engagement.

9. A seed drill (10) according to any of the preceding claims, **characterized in that** a plurality of metering systems are arranged alongside one another, each having a metering chamber (16) and a metering element arranged therein and connected to the drive shaft (20).

10. Apparatus (30) for adjusting the seeding rate of a seed drill (10), especially according to any of the preceding claims, with a motor (130) for axial displacement of a drive shaft (20) connected to a metering element, **characterized by** an adjusting lever (36) which can pivot and is arranged for axial displacement of the drive shaft (20) and which can be turned by a motor (130) which can be set in rotation, wherein a drive device with an adjusting screw (68) and a nut (54) cooperating with the thread of the screw (68) is present between the motor (130) and the adjusting screw (68).

## Revendications

1. Semoir (10) à débit de semence réglable comprenant un système de mesure, qui lui-même présente un élément de mesure pivotant dans une chambre de mesure (16), et un arbre de commande (20) à déplacement axial relié par entraînement à l'élément de mesure, un mouvement axial pouvant être imprimé à l'élément de mesure et à l'arbre de commande (20) par l'intermédiaire d'un moteur (130) afin de modifier le débit de semence du système de mesure, **caractérisé par** un levier de manoeuvre (36) pivotant, disposé de manière à induire un déplacement axial de l'arbre de commande (20) et pivotant au moyen d'un dispositif d'entraînement par l'intermédiaire du moteur (130) mis en rotation, le dispositif d'entraînement comportant une vis de réglage (68) et un écrou (54) concourant avec le filetage de la vis (68).

2. Semoir (10) conforme à la revendication 1, **caractérisé en ce que** le moteur (130) a pour fonction de faire tourner la vis de réglage (68) sur son axe longitudinal et que l'écrou (54) est fixé au levier de manoeuvre (36), et protégé de toute rotation et se déplace sur la longueur de la vis de réglage (68) lorsque cette dernière tourne.

3. Semoir (10) conforme à la revendication 1 ou 2, **caractérisé par** un interrupteur (146), à distance du moteur (130), auquel il est raccordé électriquement et qu'il commande.

4. Semoir (10) conforme à l'une des revendications précédentes, **caractérisé par** une manivelle (70) montée sur la vis de réglage (68) afin de faire tourner cette dernière manuellement, si nécessaire, pour faire pivoter le levier de manoeuvre (36).

5. Semoir (10) conforme à l'une des revendications précédentes, **caractérisé en ce que** le moteur (130) peut être désolidarisé manuellement de la vis de réglage (68) afin, notamment, de faciliter la rotation manuelle de cette dernière.

6. Semoir (10) conforme à l'une des revendications 2 à 5, **caractérisé en ce que** le moteur (130) est relié par entraînement à la vis de réglage (68) par l'intermédiaire d'une roue dentée motrice (134) entraînée par le moteur et en prise avec une roue dentée (136) reliée à la vis de réglage (68) et que le moteur (130) est mobile, notamment pivotant, et prépositionné de telle sorte que la roue dentée motrice (134) et la roue dentée (136) se trouvent en prise.

7. Semoir (10) conforme à l'une des revendications précédentes, **caractérisé par le fait qu'**un étrier de retenue (80) pivotant loge le moteur (130) et/ou une extrémité (76) de la vis de réglage (68) de manière rotative.

8. Semoir (10) conforme à la revendication 7, **caractérisé par** un dispositif de fixation (102) du moteur (130), relié pi votant sur l'étrier de retenue (80), et par un ressort (122) prépositionnant le dispositif de fixation (102) de telle sorte que la roue dentée motrice (134) et la roue dentée (136) se trouvent en prise.

9. Semoir (10) conforme à l'une des revendications précédentes, **caractérisé par** plusieurs systèmes de mesure contigus comportant chacun une chambre de mesure (16) avec à l'intérieur un élément de mesure relié à l'arbre de commande (20).

10. Dispositif (30) de réglage du débit de semence d'un semoir (10), conforme notamment à l'une des revendications précédentes, comprenant un moteur (130) pour le déplacement axial d'un arbre de commande (20) relié à un élément de mesure, **caractérisé par** un levier de manoeuvre (36) pivotant, disposé de manière à induire un déplacement axial à l'arbre de commande (20) et pivotant par l'intermédiaire d'un moteur (130) mis en rotation, un dispositif d'entraînement comportant une vis de réglage (68) et un écrou (54) concourant avec le filetage de la vis (68) étant placé entre moteur (130) et la vis de réglage (68).
